# EUROPÄISCHE PATENTSCHRIFT

(11) **EP 1 597 637 B1**
(45) Veröffentlichungstag und Bekanntmachung des Hinweises auf die Patenterteilung: **11.06.2008**
(21) Anmeldenummer: 04714750.9
(22) Anmeldetag: 26.02.2004
(51) Int. Cl.: G05B 9/03, G05B 19/05, B66C 15/06, B66C 13/22, B66D 1/54

(54) **VERFAHREN UND VORRICHTUNG ZUM SICHERHEITSABSCHALTEN VON ELEKTROANTRIEBEN**
METHOD AND DEVICE FOR SAFELY DISCONNECTING ELECTRIC DRIVES
PROCEDE ET DISPOSITIF POUR DECONNECTER DE MANIERE SURE DES COMMANDES ELECTRIQUES

(30) Priorität: 28.02.2003 DE 10309218; 28.02.2003 DE 10309219
(43) Veröffentlichungstag der Anmeldung: 23.11.2005
(73) Patentinhaber: Gottwald Port Technology GmbH, 40597 Düsseldorf (DE)
(72) Erfinder: KRUSCHINSKI, Andreas, 40468 Düsseldorf (DE); DEMELIUS, Frank, 57392 Schmallenberg (DE); KLEINE, Ronald, 58300 Wetter (DE)
(74) Vertreter: Moser & Götze
(86) Internationale Anmeldenummer: PCT/EP2004/001914
(87) Internationale Veröffentlichungsnummer: WO 2004/077177

(56) Entgegenhaltungen:
- EP-A- 0 382 231
- EP-A- 0 476 459
- EP-A- 0 504 867
- DE-A- 19 612 423

## Beschreibung

Die Erfindung betrifft ein Verfahren und eine Vorrichtung zum Sicherheitsabschalten von als frequenzgesteuerte Drehstrom-Kranmotoren ausgebildeten Elektroantrieben gemäß dem Oberbegriff des Anspruchs 1 bzw. 3, wie z.B aus DE 196 12 423 A1 bekannt.

Bei Hubwerken von Hebezeugen ist mit hoher Zuverlässigkeit eine Sicherung gegen das Abstürzen der Last beim Auftreten mechanischer Hubwerkfehler erforderlich. Aus diesem Grund sind auch vom Gesetzgeber umfangreiche Sicherheitsmaßnahmen vorgeschrieben, wie sie beispielsweise in der Europäischen Zulassung EN954.T1 für Hubwerke festgelegt sind. Zur Erreichung des hohen Sicherheitsstandards der EN954.T1, Kategorie 3 werden derzeit bei Kranen Wegbegrenzer, wie beispielsweise Getriebegrenzschalter, Inkrementalgeber zur Drehzahlregelung des Antriebs, sowie Fliehkraftschalter zur Feststellung von Überdrehzahlen der Hubwerkstrommel vorgesehen. Der Fliehkraftschalter schaltet bei einer vorbestimmten Überdrehzahl das Hubwerk ab und setzt dessen Bremse in Betrieb.

Nachteilig bei diesem Aufbau ist es, dass das Abschalten des Hubwerks nur bei einer relativ hohen Maximaldrehzahl erfolgen kann, weil im Lastbetrieb verschiedene, auch höhere Geschwindigkeiten gefahren werden. Wenn aber das Hubwerk lastabhängig mit verschiedenen Geschwindigkeiten arbeitet, wird unter Nutzen des Fliehkraftschalters die Überdrehzahl nur bei Erreichen der eingestellten maximalen Geschwindigkeit erkannt. Daraus kann es sich ergeben, dass bei maximaler Last und lastabhängigem Fahren, also beim Verfahren mit geringer Geschwindigkeit und hohem Gewicht die Abschaltung durch Überdrehzahl unnötig lange verzögert wird, mit der Gefahr, dass die sich zwischenzeitlich ungewollt beschleunigende große Last nur sehr schwer zu stoppen ist.

Als weitere Endschalter zur Sicherheitsabschaltung eines Kranhubwerkes kommen üblicher Weise sogenannte Getriebegrenzschalter zum Einsatz, die die Umdrehungen der Hubwerkstrommel erfassen und eine Endabschaltung bewirken, wenn beim Abwickeln des Seiles nur noch die erforderliche Mindestanzahl von Wicklungen auf der Seiltrommel vorhanden ist.

Des Weiteren werden nach heutigem Stand der Technik zur Wegbegrenzung von Krankatzen oder Portalkranen beispielsweise an der Achse eines Kranes elektromechanische Endschaltern angeordnet. Diese Endschalter haben oft mehrere Schaltnocken und werden mittels eines mechanischen Mitnehmers an einer bestimmten Position an der Kranbahn für die Krankatze oder den Portalkran beim Anfahren dieser Position betätigt.

Diese Technik bringt jedoch Nachteile mit sich. Sind bei einer Kranachse mehrere Endschalter vorhanden, beispielsweise wenn mehrere Geschwindigkeitsstufen dieser Kranachse abgeschaltet bzw. überwacht werden müssen, kann dieses zu einer Fehlfunktion führen, wenn der Mitnehmer versagt oder sich verstellt. Ebenfalls kann der Schalter bei hoher Verfahrgeschwindigkeit der Achse "überschaltet" werden, wie das beispielsweise bei Kreuzrollenschaltern möglich ist. Der stationär angebrachte Kreuzrollenschalter wird durch einen beweglichen Mitnehmer betätigt. Dabei führt der Schalter eine rotierende Bewegung aus. Wird nun der Mitnehmer mit einer schnellen Bewegung über den Kreuzrollenschalter hinweg geführt, so kann dieser überdreht bzw. überschaltet werden. Das erwartete eindeutige Schaltsignal wird dann nicht erkannt, es werden möglicherweise hintereinander mehrere Signalzustände gemeldet. Weitere Nachteile sind der hohe zeitliche Aufwand bei der Justierung dieser Endschalter mit deren Mitnehmern bezogen auf die Position und die Schalterhysterese.

Bei Einsatz von einer schützbasierten Verknüpfungsteuerung und speicherprogrammierbaren Steuerungen kommen als weitere Nachteile der hohe Material- und Verdrahtungsaufwand hinzu, da aus sicherheitstechnischen Überlegungen heraus sehr oft die Endschalterkontakte parallel verdrahtet werden, um eine "hardwaremäßige" Abschaltung zu gewährleisten.

Aus dem deutschen Patent DE 44 40 420 C2 ist eine Einrichtung zum Überwachen und/oder Steuern der Drehzahl eines Elektroantriebes bekannt. Der Elektroantrieb besteht aus einem an ein Wechsel- oder Drehstromnetz angeschlossenen Asynchronmotor, der mit einer Bremsvorrichtung ausgerüstet ist. An dem Asynchronmotor ist ein Drehzahlmesser angeschlossen, dessen Impulse einer Drehzahlsteuereinrichtung zugeführt werden. Die Drehzahlsteuereinrichtung wirkt über einen Frequenzumrichter auf den Asynchronmotor und steuert beziehungsweise überwacht den Asynchronmotor so, dass für verschiedene Lasten die maximale Drehzahl so begrenzt wird, dass eine gefährliche Lastbewegung durch Überschreiten des verfügbaren Bremsmomentes verhindert wird und gehobene Lasten sicher gehalten werden. Üblicher Weise ist zusätzlich aus Sicherheitsgründen ein elektromechanischer Fliehkraftschalter vorhanden, der bei einer voreingestellten maximalen Überdrehzahl auslöst.

Des Weiteren ist aus der deutschen Offenlegungsschrift DE 196 12 423 A1 ein Steuer- und Sicherheitssystem für Krananlagen mit mindestens einer Steuerung und zugehörigen Sicherheitsstromkreisen bekannt. Als Steuerungen werden insbesondere Verriegelungen definiert, die dem Komfort dienen und gegebenenfalls Sicherheitsstromkreise unterstützen. Unter Sicherheitsstromkreisen werden solche Verriegelungen verstanden, die der Standsicherheit eines Kranes und dem Schutz der Personen dienen. Über die Sicherheitsstromkreise wird im Bedarfsfalle eine zwangsläufige Abschaltung der Energiezufuhr zum jeweils betreffenden Antrieb der Krananlage bewirkt. Wird das zwangsläufige Signal eines Endschalters in einer elektronischen Steuerung verarbeitet, wird dort entsprechend ein Fehler erkannt, der dann gemeldet oder zu einer Abschaltung des Antriebes führt. Um bestehende Sicherheitsnormen zu erfüllen, wird vorgeschlagen, neben der eigentlichen Steuerung für die Sicherheitsstromkreise zwei redundante speicherprogrammierbare Steuerungen vorzusehen, die über ein redundantes Bussystem mit ebenfalls redundanten Sensoren verbunden sind. Die Sensoren dienen zur Erfassung von Weg-, Last- oder Geschwindigkeitssignalen. Dieses Steuer- und Sicherheitssystem arbeitet somit mit einer redundanten elektronischen Erfassung und einer redundanten elektronischen Auswertung der Signale von den Sensoren. Die hieraus etwaig resultierende Ausschaltung des Antriebs oder Einschaltung einer Bremse erfolgt jeweils nicht redundant sondern nur über eine der beiden speicherprogrammierbare Steuerungen.

Aufgabe der vorliegenden Erfindung ist es, ein Verfahren und eine Vorrichtung zum Sicherheitsabschalten von Elektroantrieben, insbesondere von frequenzgesteuerten Drehstrom-Kranmotoren, zu schaffen, in dem unter Beibehaltung der Sicherheitsfunktion Störungen des Elektroantriebs unabhängig von der Fahr- bzw. Hubgeschwindigkeit verzögerungsfrei erkannt und zum Abschalten des Elektroantriebs genutzt werden.

Diese Aufgabe wird durch ein Verfahren zum Sicherheitsabschalten von als frequenzgesteuerte Drehstrom-Kranmotoren ausgebildeten Elektroantrieben, mit den Merkmalen des Anspruchs 1 gelöst und auch durch eine Vorrichtung zum Sicherheitsabschalten von entsprechenden Elektroantrieben, mit den Merkmalen des Anspruchs 3. Vorteilhafte Ausgestaltungen des Verfahrens und der Vorrichtung sind in den Unteransprüchen 2 und 4 bis 12 angegeben.

Bei dem Verfahren zum Sicherheitsabschalten von als frequenzgesteuerte Drehstrom-Kranmotoren ausgebildeten Elektroantrieben, in dem Signale von mindestens einem Sensor, der die von dem Elektroantrieb bewirkten Bewegungen erfasst, in einer Auswerteeinheit mit einem vorgewählten Grenzwert verglichen werden und über die Auswerteeinheit zur Bereitstellung der Funktion eines Endschaltelements für den Fall der Überschreitung des vorgewählten Grenzwertes der Elektroantrieb sicherheitsabgeschaltet wird, werden unter Beibehaltung der Sicherheitsfunktion Störungen des Elektroantriebs unabhängig von der Fahr- bzw. Hubgeschwindigkeit verzögerungsfrei erkannt und zum Abschalten des Elektroantriebs dadurch genutzt, dass die Signale der Sensoren redundant erfasst werden und in Auswerteeinheiten redundant mit vorgewählten Grenzwerten verglichen werden, so dass ohne Verwendung von mechanischen Endschaltern für den Fall der Überschreitung des vorgewählten Grenzwertes der Elektroantrieb redundant sicherheitsabgeschaltet wird.

Bei diesem vorgeschlagenen Sicherheitsverfahren erfolgt erfindungsgemäß die Steuerung des Elektroantriebes ohne mechanische Endschalter nur durch redundante Signalüberwachung. Fehlfunktionen an mechanischen Endschaltergeräten und den zugehörigen Komponenten, wie sie eingangs zum Stand der Technik beschrieben wurden, werden somit sicher vermieden. Die zeitaufwendige Einstellung von Endschaltern entfällt.

Im Zusammenhang mit der vorliegenden Erfindung werden unter Endschaltelementen mechanische Endschalter wie Getriebegrenzschalter, mechanische Fliehkraftschalter und mechanische Wegbegrenzungsschalter verstanden. Außerdem ist die vorliegende Erfindung mit jeglicher Art von gesteuerten oder geregelten Elektroantrieben, die mit Gleich-, Wechsel- oder Drehstrom angetrieben sind, einsetzbar.

Eine weitere Optimierung der Sicherheit, wird dadurch erreicht, dass die Signale der redundanten Sensoren jeweils zugeordneten redundanten Auswerteeinheiten zugeführt und dort ausgewertet werden sowie bei einer Abweichung der jeweiligen Signale der Sensoren voneinander der Elektroantrieb durch Sicherheitsabschaltelemente sicherheitsabgeschaltet wird.

Auch führt zu einer verbesserten Sicherheit, dass die redundanten Auswerteeinheiten sich gegenseitig überwachen und bei einer Abweichung ihrer Abschaltsignale voneinander der Elektroantrieb durch redundante Sicherheitsabschaltelemente sicherheitsabgeschaltet wird.

Der besondere Vorteil der Erfindung besteht darin, dass die beiden Teile der Auswerteeinheit nach dem Prinzip der gegenseitigen Überprüfung der jeweils eigenen getroffenen logischen Entscheidung arbeiten. Der logisch positive Zustand, also die Freigabe des Elektroantriebes, wird nur mit gegenseitiger Zustimmung der ' Auswerteeinheiten aufrechterhalten. Dagegen wird der Abbruch des logisch positiven Zustands schon alleine, also ohne gegenseitige Zustimmung der Auswerteeinheiten durchgeführt. Jeder einzelne Teil der Auswerteeinheit kann also für sich einen Abbruch erzwingen. Letztlich überprüfen beide Auswerteeinheiten ihren "Live" - Status und dadurch ihre Kommunikationsverbindungen.

Besonders geeignet ist dieses Verfahren in der Ausgestaltung, dass über redundante Sensoren die Drehzahl eines von dem Elektroantrieb bewegten Körpers, insbesondere einer Seiltrommel und/oder eines Laufrades, erfasst werden und über weitere redundante Sensoren die Position des von dem Elektroantrieb bewegten Körpers, insbesondere einer Seiltrommel und/oder eines Laufrades, erfasst werden.

Bei einer Vorrichtung zum Sicherheitsabschalten von Elektroantrieben, mit mindestens einem Sensor, der die von dem Elektroantrieb bewirkten Bewegungen erfasst, mit einer die Signale des Sensors verarbeitenden Auswerteeinheit zum Vergleich der Signale des Sensors mit einem vorgewählten Grenzwert und zur Sicherheitsabschaltung des Elektroantriebs in Bereitstellung der Funktion eines Endschaltelements für den Fall der Überschreitung des vorgewählten Grenzwertes, werden unter Beibehaltung der Sicherheitsfunktion Störungen des Elektroantriebs unabhängig von der Fahr- bzw. Hubgeschwindigkeit verzögerungsfrei erkannt und zum Abschalten des Elektroantriebs dadurch genutzt, dass die Sensoren und die Auswerteeinheit redundant vorgesehen sind und jeweils einer der redundanten Sensoren einer der Auswerteeinheiten zugeordnet ist, in den Auswerteeinheiten das Signal der Sensoren mit den vorgewählten Grenzwerten verglichen werden und von denen für den Fall der Überschreitung des vorgewählten Grenzwertes ohne Verwendung von mechanischen Endschaltern der Elektroantrieb redundant sicherheitsabgeschaltet wird.

Eine weitere Sicherheitsverbesserung wird dadurch erreicht, dass die redundanten Auswerteeinheiten über eine Kommunikationsverbindung zur gegenseitigen Überwachung miteinander verbunden sind, in den jeweils zugeordneten redundanten Auswerteeinheiten die Signale der jeweils redundanten Sensoren verglichen werden und die Auswerteeinheiten bei einer Abweichung der jeweiligen Signale der Sensoren voneinander den Elektroantrieb durch Sicherheitsabschaltelemente sicherheitsabschalten. Auch der Sicherheit dient, dass die redundanten Auswerteeinheiten über eine Kommunikationsverbindung zur gegenseitigen Überwachung miteinander verbunden sind und bei einer Abweichung ihrer Abschaltsignale voneinander den Elektroantrieb durch redundante Sicherheitsabschaltelemente sicherheitsabschalten.

In einer Ausführung ist vorgesehen, dass erste redundante Sensoren für die Erfassung der Drehzahl eines von dem Elektroantrieb bewegten Körpers, insbesondere einer Seiltrommel und/oder einem Laufrad, dem Körper zugeordnet sind und zweite redundante Sensoren zur Erfassung der Position des von dem Elektroantrieb bewegten Körpers, insbesondere einer Seiltrommel und/oder einem Laufrad, dem Körper zugeordnet sind. Auf diese Weise wird mit einfachen Mitteln einer Sicherheitsschaltung die geforderte Kategorie 3 nach der Europäischen Sicherheit EN954.T1 erfüllt, und zwar ohne den Einsatz eines als nachteilig erkannten mechanischen Fliehkraftschalters, allein durch redundante Drehzahlüberwachung.

Eine weitere Ausgestaltung sieht vor, dass dem Elektroantrieb abtriebsseitig mindestens zwei Absolutwertgeber für eine redundante Positionserfassung zugeordnet sind.

Dadurch, dass die Auswerteeinheiten die absoluten Positionswerte eines Fahrweges oder Ab-/Aufrollweges eines Seils ständig aktualisieren und die in den Auswerteeinheiten fest hinterlegten Werte ständig mit den Istwerten eines Fahrweges oder Ab-/Aufrollweges eines Seils vergleichen, können nach einem weiteren Merkmal der Erfindung bei Annäherung der momentan durch die Absolutwertgeber gelieferten Positionsistwerte an den das Ende des Fahrweges oder Ab-/Aufrollweges eines Seils definierenden Positionswert, die Auswerteeinheiten die Schaltpunkte auf ihren Abschaltkurven proportional zu dieser Annäherung verringern. Ein feinfühliges exaktes Abschalten der Achsbewegung wird dadurch ermöglicht.

Besonders vorteilhaft ist, dass ein Impulsgeber antriebsseitig und mindestens ein Impulsgeber abtriebsseitig dem Körper zugeordnet ist, der antriebsseitige Impulsgeber und der abtriebsseitige Impulsgeber je mit einer Auswerteinheit verbunden ist, in jeder der Auswerteinheiten redundant die fortlaufend über die Inkremente der antriebs- und abtriebsseitigen Impulsgeber die redundant Drehzahlen der Körperachse errechnet und mit einem in der Auswerteinheit hinterlegten Wert einer Überdrehzahl zur Sicherheitsabschaltung des Hubwerkes Elektroantriebes verglichen werden.

In einer Ausgestaltung der Erfindung ist vorgesehen, dass der Körper eine Seiltrommel ist und in den Auswerteinheiten die Werte der Überdrehzahl als Funktion der zu hebenden Last hinterlegt sind.

Eine besonders einfache gegenseitige Überprüfbarkeit der Auswerteeinheiten wird dadurch erreicht, dass die Auswerteinheiten in Funktion und Hardware redundant ausgelegt sind.

Vorteilhafter Weise können die Auswerteinheiten in einer einzigen fehlersicheren Auswerteeinheit zusammengefasst werden.

Auch wird die durchgehend verwendete Redundanz, dadurch erhalten, dass die Sensoren jeweils mit einer Sendeeinheit verbunden sind, jede der Sendeeinheiten über eine eigene Übertragungsstrecke mit jeweils einer Empfangseinheit verbunden sind, die wiederum an der zugehörigen Auswerteinheit angeschlossen sind.

In einer weiteren Ausgestaltung der Erfindung ist vorgesehen, dass die beiden Auswerteeinheiten die absoluten Positionswerte der beiden Absolutwertgeber ständig aktualisieren und die aktuellen Positionsistwerte mit fest in den Auswerteeinheiten hinterlegten Positionssollwerten des Fahrweges vergleichen. Das Versagen eines Absolutwertgebers wird erkannt und gemeldet, der elektrische Sicherheitskreis wird gegebenenfalls abgeschaltet.

Eine Sicherheitsschaltung nach der Erfindung in verschiedenen Ausführungsformen wird anhand der nachfolgenden Zeichnung beschrieben. Es zeigen:
- Figur 1: eine schematische Schaltungsanordnung einer Sicherheitsschaltung für einen als Fahrmotor eines Brückenkrans ausgebildeten Elektroantrieb und
- Figur 2: eine schematische Schaltungsanordnung einer Sicherheitsschaltung für einen als Hubwerksmotor ausgebildeten Elektroantrieb.

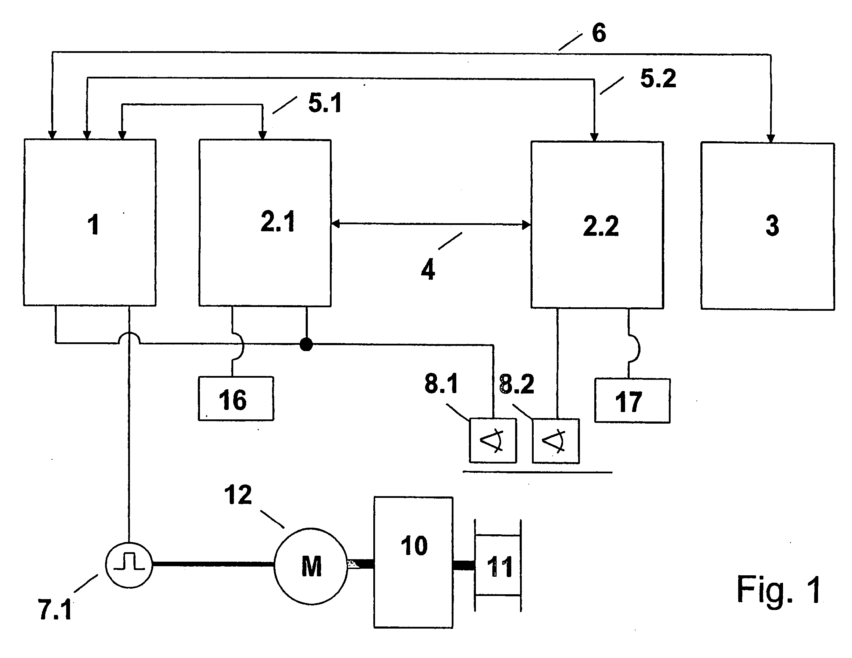

In der Figur 1 ist eine schematische Schaltungsanordnung einer Sicherheitsschaltung für einen als Fahrmotor eines Brückenkrans ausgebildeten Elektroantrieb 12 gezeigt. Diese Schaltungsanordnung ist selbstverständlich auch auf einen Katzfahrantrieb übertragbar. Die Verbindung zwischen der Gerätesteuerung 3 und dem Stromrichter 1 zur Eingabe der Fahrbefehle ist durch die Leitung 6 angedeutet. Die Auswerteeinheiten für die Position des Kranes beziehungsweise dessen angetriebenen Körpers in Form eines Radblocks 11 sind mit 2.1 und 2.2 bezeichnet. Bei den Auswerteeinheiten 2.1 und 2.2 handelt es sich um jeweils selbstständige Rechnereinheiten. Jeweils eine dieser Einheiten 2.1 und 2.2 besteht aus einem Netzteil zur Spannungsversorgung, einer CPU zur Bearbeitung von logischen Befehlen, einem Speicher zur Ablage der Programmbefehle, Ein- und Ausgabemodulen zur Bearbeitung von Signalen und Messgrößen sowie einem internen Kommunikationsbus, welcher die CPU, Speichermedium und Ein- und Ausgabemodule verbindet. Beide Auswerteeinheiten 2.1 und 2.2 sind identisch aufgebaut.

Um für den vorliegenden Fall die Anforderungen der aus der Risikobetrachtung nach EN95471 festgelegten Kategorie 3 zu erfüllen, wird auf der Abtriebsseite, parallel zur Bewegung der Achse des Radblockes 11 zusätzlich zu einem vorhandenen Absolutwertgeber 8.1 ein zweiter Absolutwertgeber 8.2, die die Position des Krans erfassen, angebaut. Diese Absolutwertgeber 8.1, 8.2 können beispielsweise als entlang der Fahrstrecke angeordneter Transponder und einer im Bereich des Radblocks 11 angeordneten Antenne ausgebildet sein. Jede andere Art der berühungslosen Positionserfassung kann hier auch verwendet werden. Auch ist es möglich, eine Zahnstange entlang der Fahrstrecke anzuordnen, die mit einem Zahnrad kämmt, das im Bereich des Radblocks 11 befestigt ist und dessen Drehbewegungen von einem Sensor erfasst werden. Die Auswertung dieser redundanten Sensorgruppe erfolgt ebenfalls mit den zwei, sich gegenseitig überwachenden Auswerteeinheiten 2.1 und 2.2. Diese Einheiten 2.1 und 2.2 sind redundant in Funktion und Hardware ausgelegt und übernehmen mit dem redundanten Positionserfassungssystem mit den Absolutwertgebern 8.1 und 8.2 die Aufgaben der konventionellen mechanischen bzw. elektrotechnischen Endschalter. Der Absolutwertgeber 8.1 und 8.2 liefert kontinuierliche Messwerte entlang einer abgefahrenen Strecke. Diese Messwerte sind proportional und stetig und können zur Längenmessung oder Positionsfeststellung benutzt werden. Die Auswerteeinheiten 2.1 und 2.2 fragen gleichzeitig den Zustand der Stellglieder für den Stromrichter 1 die Sicherheitskreise ab, um somit die sichere Funktion der Stellglieder zu gewährleisten.

Dieser redundante Positionserfassungs-, Auswerte- Abschaltaufbau erfüllt die Forderung der Kategorie 3 nach EN954.T1, d.h. das Versagen eines Gebers 8.1 oder 8.2 wird erkannt, gemeldet und gegebenenfalls die Bewegung der vom Motor 12 über das Getriebe 10 angetriebenen Achse des Radblocks 11 durch Abschaltung des Motors 12 durch Sicherheitsabschaltelemente 16, 17 beendet. Dabei wird jeder einzelne Fehler in den Geberkreisen erkannt. Durch die Rückmeldung 5.1 bzw. 5.2 aus den Stellgliedern für den Stromrichter 1 in die beiden Teile der Auswerteeinheit 2.1 und 2.2 ist ebenfalls die Einfehtersicherheit gewährleistet. Das Stellglied oder auch Schaltschütz schaltet mittels einer Steuerspannung eine Betätigungsspule, welche den eigentlichen Wirkstromkreis öffnet oder schließt. Je nach Ausführung eines Stellgliedes bezeichnet man dieses als Öffner oder Schließer. Der Stromrichter 1 steuert den Elektromotor an und regelt dessen Laufverhalten. Durch Aufbereiten von Strom, Spannung stellt der Stromrichter 1 jederzeit die richtigen Momente und Drehzahlen für den Elektromotor zur Verfügung.

Die Auswerteeinheiten 2.1 und 2.2 aktualisieren ständig ihre absoluten Positionswerte durch die beiden Absolutwertgeber 8.1 und 8.2. Mit dem in diesen Auswerteeinheiten fest hinterlegten Positionswert des Bahnendes werden die aktuell einlaufenden Positionsistwerte verglichen. Bei Annäherung der Werte, Positionswert des Bahnendes und momentanen durch den Geber gelieferten Positionsistwert verringern die Auswerteeinheiten 2.1 bzw. 2.2 proportional zu dieser Näherung die Schaltpunkte auf ihren Abschaltkurven. Bei Wertgleichheit schalten die Auswerteeinheiten 2.1 bzw. 2.2 unabhängig von weiteren Schaltebenen bzw. anderen logischen Zuständen den Wert auf Null, so dass hierdurch die Achsbewegung des Radblocks 11 beendet wird.

Beide Teile der Auswerteeinheit 2.1 und 2.2 arbeiten nach dem Prinzip der gegenseitigen Überprüfung 4 der jeweils eigen getroffenen logischen Entscheidung und der logisch positive Zustand, also die Freigabe zum Verfahren der Achse des Radblocks 11, wird nur mit gegenseitiger Zustimmung 4 der Auswerteeinheiten aufrechterhalten ("Undierung"). Dagegen wird der Abbruch des logisch positiven Zustands schon alleine, also ohne gegenseitige Zustimmung der Auswerteeinheiten 2.1, 2.2 durchgeführt. Jeder einzelne Teil der Auswerteeinheit 2.1 bzw. 2.2 kann also für sich einen Abbruch erzwingen ("Veroderung"). Letztlich überprüfen beide Auswerteeinheiten ihren 11 Live" - Status und dadurch ihre Kommunikationsverbindungen 4.

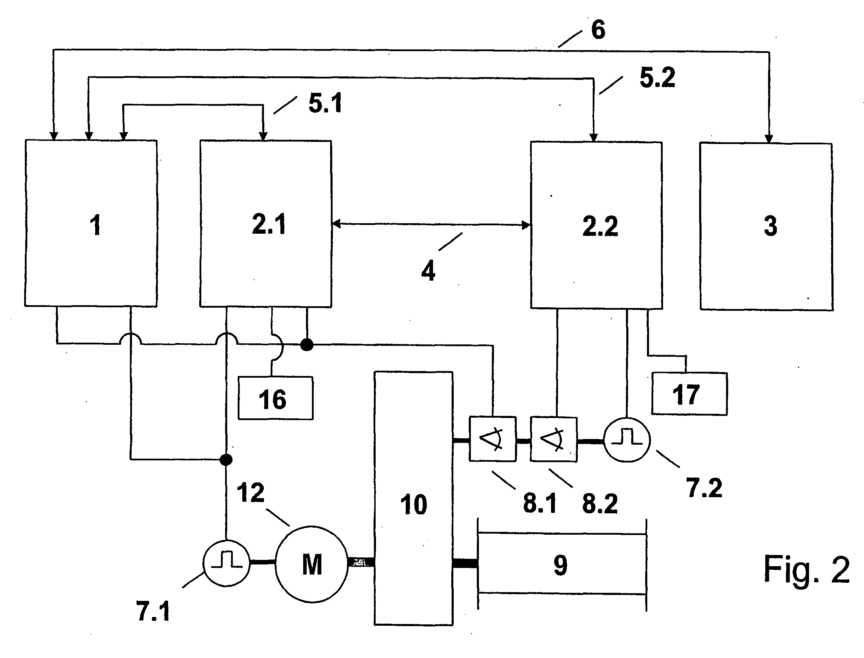

In der Figur 2 ist eine schematische Schaltungsanordnung einer Sicherheitsschaltung für einen als Hubwerksmotor ausgebildeten Elektroantrieb 12 gezeigt. Mit 1 ein Stromrichter bezeichnet, der von einer Gerätesteuerung 3 Befehle 6 für den Hubwerksmotor 12 erhält. Der Stromrichter 1 steuert den als frequenzgesteuerten Drehstrommotor ausgebildeten Hubwerksmotor 12 an und regelt dessen. Laufverhalten. Durch Aufbereiten von Strom, Spannung stellt der Stromrichter 1 jederzeit die richtigen Momente und Drehzahlen für den Hubwerksmotor 12 zur Verfügung. Über den Stromrichter 1 wird auch eine Lastmessung der von dem Hubwerksmotor 12 angehobenen bzw. abgesenkten Last mittels eines Stromaufnahmevergleichs vorgenommen. Da im Stromrichter 1 fortwährend der Strom gemessen wird und dieser proportional zu gehobenen Last ist, kann man den Strom auf ein Lastgewicht normieren und somit hierüber das Lastgewicht bestimmen. Auch wäre für die Lastmessung eine Anordnung eines zusätzlichen Sensors an dem Hubwerk möglich. Mit 2.1 und 2.2 sind zwei Auswerteeinheiten bezeichnet, die ihre Rückmeldungen 5.1 und 5.2 aus den Stellgliedern des Stromrichters 1 erhalten. Bei den Auswerteeinheiten 2.1 und 2.2 handelt es sich um jeweils selbstständige Rechnereinheiten. Jeweils eine dieser Auswerteeinheiten 2.1 und 2.2 besteht aus einem Netzteil zur Spannungsversorgung, einer CPU zur Bearbeitung von logischen Befehlen, einem Speicher zur Ablage der Programmbefehle, Ein- und Ausgabemodulen zur Bearbeitung von Signalen und Messgrößen sowie einem internen Kommunikationsbus, welcher die CPU, Speichermedium und Ein- und Ausgabemodule verbindet. Beide Auswerteeinheiten 2.1 und 2.2 sind identisch aufgebaut. Kommunikation und Vergleiche zwischen den Auswerteeinheiten 2.1 und 2.2 sind mit der Kommunikationsverbindung 4 angedeutet. Mit 7.1 und 7.2 sind Impulsgeber des Hubwerkes bezeichnet. Die Impulsgeber 7.1 und 7.2 sind als Impulsdrehgeber oder auch Inkrementalgeber ausgebildet, die kontinuierlich aufsteigende oder abfallende Messwerte der Umdrehung von der Hubwerksachse, d.h. der Welle des Hubwerksmotors beziehungsweise der Abtriebswelle des Getriebes 10 oder der Welle der Seiltrommel 9, liefern. Diese Messwerte sind proportional und stetig sowie werden zur Drehzahlbestimmung verwendet. Mit zusätzlichen Referenzpunkten könnten über die Impulsgeber 7.1 und 7.2 auch Wege gemessen werden. Die Messwerte der Impulsgeber 7.1 und 7.2 sind flüchtig, d.h. nach Spannungswiederkehr wird neu erfasst beziehungsweise gezählt, ohne aber den alten Wert, der vor der Spannungsabschaltung existierte, zu kennen. Mit 8.1 und 8.2 werden redundante Absolutwertgeber beziffert, die der Positionsüberwachung der Hubwerkachse dienen. Der Absolutwertgeber 8.1 und 8.2 liefert jeweils kontinuierliche Messwerte entlang einer Wickelstrecke. Diese Messwerte sind proportional und stetig sowie können zur Längenmessung benutzt werden. Das Hubwerk weist eine Seiltrommel 9 auf, die über einen Getriebeblock 10 von dem Hubwerkmotor 12 angetrieben wird. Die Absolutwertgeber 8.1 und 8.2 sind hierbei dem Getriebeblock 10 zugeordnet.

Zusammen mit den zwei Absolutwertgebern 8.1, 8.2 für die Positionsüberwachung an der Hubwerksachse des Getriebeblocks 10, wird die redundante Impulsgebergruppe 7.1 und 7.2 ebenfalls durch die Auswerteeinheiten 2.1, 2.2 bearbeitet. Hier erfolgt die Feststellung der Drehzahl an der Hubwerksachse, die bei herkömmlichen Sicherheitssystemen nach dem Stand der Technik mit dem konventionellen Fliehkraftgeber erfasst wurde. Die fortlaufend über die Inkremente der beiden Impulsgeber 7.1, 7.2 redundant errechnete Drehzahl wird gegenseitig und mit dem in den Auswerteeinheiten 2.1, 2.2 hinterlegten Wert der Überdrehzahl bei 4 verglichen. Die Überdrehzahl wird in den Auswerteinheiten 2.1, 2.2 als Funktion der von dem Hubwerk zu hebenden Last hinterlegt. Die an dem Hubwerk anstehende Last wird wie zuvor beschrieben über den Stromrichter 1 über eine Strommessung oder entsprechende Sensoren ermittelt, so dass in der Auswerteeinheit 2.1, 2.2 jeweils die zuvor festgelegte Überdrehzahl zu der aktuellen Last abrufbar ist. Bei Erreichen der kritischen Überdrehzahl schalten die Auswerteeinheiten 2.1, 2.2 über die Sicherheitsabschaltelemente 16, 17 das Stellglied für den Stromrichter 1 des Hubwerks ab und beenden die Achsbewegung der Seiltrommel 9. Die Sicherheitsabschaltelemente 16, 17 sind als Schütze ausgebildet.

Durch die redundante Drehzahlerfassung und unter Verwendung des momentanen Last-Istwertes in der Auswerteeinheit 2.1, 2.2 ist es mit der Erfindung möglich, bei lastabhängiger Hubgeschwindigkeit das Erreichen der Überdrehzahl früher, also rechtzeitig zu erkennen und die Bewegung der Hubwerksachse der Hubtrommel 9 bei jeder möglichen, lastabhängigen Geschwindigkeit abzuschalten.

Dieser redundante Inkremental-Impulsgeber 7.1, 7.2 und Absolutwertgeberaufbau 8.1, 8.2 für ein Hubwerk mit Seiltrommel 9, Getriebeblock 10 und Hubwerkmotor 12 erfüllt die Forderung der Kategorie 3 nach der Europäischen Zulassung EN954.T1 für Hubwerke. Der Ausfall eines Gebers 7.1, 7.2, 8.1, 8.2 führt zum Erkennen des fehlerhaften Zustands, er wird sofort gemeldet und führt zur Abschaltung der Hubwerksachse durch die Sicherheitsabschaltelemente. Jeder einzelne Fehler in den Geberkreisen 7.1, 7.2, 8.1, 8.2 wird bearbeitet. Durch die Rückmeldung 5.1, 5.2 aus den Stellgliedern des Stromrichters 1 in die beiden Teile der Auswerteeinheit 2.1, 2.2 ist die Einfehlersicherheit stets gewährleistet.

### Bezugszeichenliste

- 1: Stromrichter
- 2.1: Auswerteeinheit
- 2.2: Auswerteeinheit
- 3: Gerätesteuerung
- 4: Kommunikationsverbindung
- 5.1: Rückmeldung der Auswerteeinheit 2.1
- 5.2: Rückmeldung der Auswerteeinheit 2.2
- 6: Befehle der Steuerung
- 7.1: Impulsgeber
- 7.2: Impulsgeber
- 8.1: Absolutwertgeber
- 8.2: Absolutwertgeber
- 9: Seiltrommel
- 10: Getriebeblock
- 11: Radblock
- 12: Elektroantrieb
- 16: Sicherheitsabschaltelement
- 17: Sicherheitsabschattelement

## Patentansprüche

1. Verfahren zum Sicherheitsabschalten von als frequenzgesteuerte Drehstrom-Kranmotoren ausgebildeten Elektroantrieben, in dem Signale von mindestens einem Sensor (7.1, 7.2, 8.1, 8.2), der die von dem Elektroantrieb bewirkten Bewegungen erfasst, in einer Auswerteeinheit (2.1, 2.2) mit einem vorgewählten Grenzwert verglichen werden und über die Auswerteeinheit (2.1, 2.2) zur Bereitstellung der Funktion eines Endschaltelements für den Fall der Überschreitung des vorgewählten Grenzwertes der Elektroantrieb sicherheitsabgeschaltet wird,
wobei die Signale der Sensoren (7.1, 7.2, 8.1, 8.2) redundant erfasst werden und in Auswerteeinheiten (2.1, 2.2) redundant mit vorgewählten Grenzwerten verglichen werden, so dass ohne Verwendung von mechanischen Endschaltern für den Fall der Überschreitung des vorgewählten Grenzwertes der Elektroantrieb (12) redundant sicherheitsabgeschaltet wird, wobei
die Signale der redundanten Sensoren (7.1,7.2,8.1,8.2) jeweils zugeordneten redundanten Auswerteeinheiten (2.1, 2.2) zugeführt und dort ausgewertet werden und die redundanten Auswerteeinheiten (2.1, 2.2) sich gegenseitig überwachen **dadurch gekennzeichnet, dass** bei einer Abweichung der jeweiligen Signale der Sensoren (7.1, 7.2, 8.1, 8.2) voneinander der Elektroantrieb (12) jeweils durch redundante Sicherheitsabschaltelemente (16,17) sicherheitsabgeschaltet wird
und bei einer Abweichung ihrer Abschaltsignale voneinander der Elektroantrieb (12) jeweils durch redundante Sicherheitsabschaltelemente (16, 17) sicherheitsabgeschaltet wird.

2. Verfahren nach Anspruch 1, **dadurch gekennzeichnet, dass** über redundante. Sensoren (7.1, 7.2) die Drehzahl eines von dem Elektroantrieb (12) bewegten Körpers, insbesondere einer Seiltrommel (9) und/oder eines Laufrades (11), erfasst werden und über weitere redundante Sensoren (8.1, 8.2) die Position des von dem Elektroantrieb (12) bewegten Körpers, insbesondere einer Seiltrommel (9) und/oder eines Laufrades (11), erfasst werden.

3. Vorrichtung zum Sicherheitsabschalten von als frequenzgesteuerte Drehstrom-Kranmotoren ausgebildeten Elektroantrieben zur Durchführung eines Verfahrens nach den vorgenannten Ansprüchen 1 oder 2, mit mindestens einem Sensor, der die von dem Elektroantrieb bewirkten Bewegungen erfasst, mit einer die Signale des Sensors verarbeitenden Auswerteeinheit zum Vergleich der Signale des Sensors mit einem vorgewählten Grenzwert und zur Sicherheitsabschaltung des Elektroantriebs in Bereitstellung der Funktion eines Endschaltelements für den Fall der Überschreitung des vorgewählten Grenzwertes,
wobei die Sensoren (7.1, 7.2, 8.1, 8.2) und die Auswerteeinheit (2.1, 2.2) redundant vorgesehen sind und jeweils einer der redundanten Sensoren (7.1, 7.2, 8.1, 8.2) einer der Auswerteeinheiten (2.1, 2.2) zugeordnet ist, in den Auswerteeinheiten (2.1, 2.2) die Signale der Sensoren (7.1, 7.2, 8.1, 8.2) mit den vorgewählten Grenzwerten verglichen werden und von denen für den Fall der Überschreitung des vorgewählten Grenzwertes ohne Verwendung von mechanischen Endschaltern der Elektroantrieb (12) redundant sicherheitsabgeschaltet wird, wobei
die redundanten Auswerteeinheiten (2.1, 2.2) über eine Kommunikationsverbindung (4) zur gegenseitigen Überwachung miteinander verbunden sind, in den jeweils zugeordneten redundanten Auswerteeinheiten (2.1, 2.2) die Signale der jeweils redundanten Sensoren (7.1, 7.2, 8.1, 8.2) verglichen werden und die redundanten Auswerteeinheiten (2.1, 2.2) über eine Kommunikationsverbindung (4) zur gegenseitigen Überwachung miteinander verbunden sind **dadurch gekennzeichnet, dass** die Auswerteeinheiten (2.1, 2.2) bei einer Abweichung der jeweiligen Signale der Sensoren (7.1, 7.2, 8.1, 8.2) voneinander den Elektroantrieb (12) jeweils über redundante Sicherheitsabschaltelemente (16, 17) sicherheitsabschalten und bei einer Abweichung ihrer Abschaltsignale voneinander den Elektroantrieb (12) jeweils über redundante Sicherheitsabschaltelemente (16, 17) sicherheitsabschalten.

4. Vorrichtung nach Anspruche 3, **dadurch gekennzeichnet, dass** erste redundante Sensoren (7.1, 7.2) für die Erfassung der Drehzahl eines von dem Elektroantrieb (12) bewegten Körpers, insbesondere einer Seiltrommel (9) und/oder einem Laufrad (11), dem Körper zugeordnet sind und zweite redundante Sensoren zur Erfassung der Position des von dem Elektroantrieb (12) bewegten Körpers, insbesondere eine Seiltrommel (9) und/oder ein Laufrad (11), dem Körper zugeordnet sind.

5. Vorrichtung nach einem der Ansprüche 3 oder 4, **dadurch gekennzeichnet, dass** dem Elektroantrieb (12) abtriebsseitig mindestens zwei Absolutwertgeber (8.1, 8.2) für eine redundante Positionserfassung zugeordnet sind.

6. Vorrichtung nach Anspruch 5, **dadurch gekennzeichnet, dass** die beiden Auswerteeinheiten (2.1, 2.2) die absoluten Positionswerte der beiden Absolutwertgeber (8.1, 8.2) ständig aktualisieren und die aktuellen Positionsistwerte mit fest in den Auswerteeinheiten (2.1, 2.2) hinterlegten Positionssollwerten eines Fahrweges oder Ab-/Aufrollweges eines Seils vergleichen.

7. Vorrichtung nach Anspruch 5 oder 6, **dadurch gekennzeichnet, dass** bei Annäherung der momentan durch die Absolutwertgeber (8.1, 8.2) gelieferten Positionsistwerte an den das Ende des Fahrweges bzw. des Ab-/Aufrollweges definierenden Positionswert, die Auswerteeinheiten (2.1, 2.2) die Schaltpunkte auf ihren Abschaltkurven proportional zu dieser Annäherung verringern.

8. Vorrichtung nach einem der Ansprüche 3 bis 7, **dadurch gekennzeichnet, dass** ein Impulsgeber (7.1) antriebsseitig und mindestens ein lmpulsgeber (7.2) abtriebsseitig dem Körper (9, 11) zugeordnet sind, in jeder der Auswerteinheiten (2.1, 2.2) redundant fortlaufend über die Inkremente der antriebs- und abtriebsseitigen Impulsgeber (7.1, 7.2) die Drehzahl der Körperachse errechnet und mit einem in der Auswerteinheit (2.1, 2.2) hinterlegten Wert einer Überdrehzahl zur Sicherheitsabschaltung des Elektroantriebes verglichen werden.

9. Vorrichtung nach Anspruch 8, **dadurch gekennzeichnet, dass** der Körper eine Seiltrommel (9) ist und in den Auswerteinheiten (2.1, 2.2) die Werte der Überdrehzahl als Funktion der zu hebenden Last hinterlegt sind.

10. Vorrichtung nach einem der Ansprüche 3 bis 9, **dadurch gekennzeichnet, dass** die Auswerteinheiten (2.1, 2.2) in Funktion und Hardware redundant ausgelegt sind.

11. Vorrichtung nach einem der Ansprüche 3 bis 10, **dadurch gekennzeichnet, dass** die Auswerteinheiten (2.1, 2.2) in einer einzigen fehlersicheren Auswerteeinheit zusammengefasst sind.

12. Vorrichtung nach einem der Ansprüche 3 bis 11, **dadurch gekennzeichnet, dass** die Sensoren (7.1, 7.2, 8.1, 8.2) jeweils mit einer Sendeeinheit verbunden sind, jede der Sendeeinheiten über eine eigene Übertragungsstrecke mit jeweils einer Empfangseinheit verbunden ist, die wiederum an der zugehörigen Auswerteinheit (2.1, 2.2) angeschlossen ist.

## Claims

1. Method of switching off, for safety purposes, electric drives in the form of frequency-controlled three-phase crane motors, in which method signals from at least one sensor (7.1, 7.2, 8.1, 8.2) which senses the movements caused by the electric drive are compared in an analysing unit with a pre-selected limiting value and, to allow the function of a limit-switch member to be performed in the event of the pre-selected limiting value being exceeded, the electric drive is switched off for safety purposes by means of the analysing unit (2.1, 2.2), the signals from the sensors (7.1, 7.2, 81. 8.2) being sensed redundantly and being compared with pre-selected limiting values in analysing units (2.1, 2.2) redundantly so that, in the event of the pre-selected limiting value being exceeded, the electric drive (12) is switched off for safety purposes redundantly without the use of mechanical limit switches, the signals from the redundant sensors (7.1, 7.2, 8.1, 8.2) being fed to respective associated redundant analysing units (2.1, 2.2) and being analysed there, and the redundant analysing units (2.2, 2.2) monitoring one another, **characterised in that**, if the respective signals from the sensors (7.1, 7.2, 8.1, 8.2) differ from one another, the electric drive is switched off for safety purposes by respective redundant switching-off members (16, 17) for safety purposes, and if there is a difference between the switch-off signals from the redundant analysing units (2.1, 2.2) the electric drive is switched off for safety purposes by respective redundant switching-off members (16, 17) for safety purposes.

2. Method according to claim 1, **characterised in that** the speed of revolution of a body which is moved by the electric drive (12), and in particular of a cable drum (9) and/or of a travel wheel (11), is sensed by means of redundant sensors (7.1, 7.2), and the position of the body which is moved by the electric drive, and in particular of a cable drum (9) and/or of a travel wheel (11), is sensed by means of further redundant sensors (8.1,8.2).

3. Arrangement for the switching-off, for safety purposes, of electric drives in the form of frequency-controlled three-phase crane motors, for carrying out a method according to foregoing claim 1 or 2, having at least one sensor which senses the movements caused by the electric drive, having an analysing unit, which processes the signals from the sensor, for comparing the signals from the sensor with a pre-selected limiting value and for switching off, for safety purposes, the electric drive by performing the function of a limit switch member in the event of the pre-selected limiting value being exceeded, the sensors (7.1, 7.2, 8.1, 8.2) and the analysing units (2.1, 2.2) being provided in redundant form and respective ones of the redundant sensors (7.1, 7.2, 8.1, 8.2) being associated with respective ones of the analysing units (2.1, 2.2), the signals from the sensors (7.1, 7.2, 8.1, 8.2) being compared with the pre-selected limiting values in the analysing units (2.1, 2.2) and, in the event of the pre-selected limiting value being exceeded, the electric drive (12) being switched off for safety purposes in a redundant manner by the analysing units (2.1, 2.2), without the use of mechanical limit switches, the redundant analysing units (2.1, 2.2) being connected together via a communications connection (4) in order to monitor one another, the signals from the respective redundant sensors (7.1, 7.2, 8.1, 8.2) being compared in the respective associated redundant analysing units (2.1, 2.2) and the redundant analysing units (2.1, 2.2) being connected together via a communications connection (4) in order to monitor one another, **characterised in that**, if the respective signals from the sensors (7.1, 7.2, 8.1, 8.2) differ from one another, the respective redundant analysing units (2.1, 2.2) switch off, for safety purposes, the electric drive (12) by means of redundant switching-off members (16, 17) for safety purposes, and if there is a difference between the switch-off signals from the redundant analysing units (2.1, 2.2), the redundant analysing units (2.1, 2.2) switch off, for safety purposes, the electric drive (12) by means of respective redundant switching-off members (16, 17) for safety purposes.

4. Arrangement according to claim 3, **characterised in that** first redundant sensors (7.1, 7.2) for sensing the speed of revolution of a body which is moved by the electric drive (12), and in particular of a cable drum (9) and/or of a travel wheel (11), are associated with the body, and second redundant sensors for sensing the position of the body which is moved by the electric drive (12), and in particular a cable drum (9) and/or a travel wheel (11), are associated with the body.

5. Arrangement according to either of claims 3 and 4, **characterised in that** the electric drive (12) has associated with it on the drive output side at least two absolute-value emitters (8.1, 8.2) for redundant position sensing.

6. Arrangement according to claim 5, **characterised in that** the two analysing units (2.1, 2.2) continuously update the absolute position values from the two absolute-value emitters (8.1, 8.2) and compare the current values for actual position with desired values for position for a distance of travel or a distance for which a cable is rolled on/off which are stored in fixed form in the analysing units (2.1, 2.2).

7. Arrangement according to claim 5 or 6, **characterised in that**, as the instantaneous values for actual position which are supplied by the absolute-value emitters (8.1, 8.2) approach the value for position which defines the end of the distance of travel or of the roll-on/off distance, the analysing units (2.1, 2.2) reduce the switching-off points on their switching-off curves in proportion to this approach.

8. Arrangement according to one of claims 3 to 7, **characterised in that** a pulse emitter (7.1) is associated with the body (9, 11) on the drive input side and at least one pulse emitter (7.2) is associated with the body (9, 11) on the drive output side and, in each of the analysing units (2.1, 2.2), the speed of revolution of the shaft of the body is continuously and redundantly calculated from the increments given by the pulse emitters (7.1, 7.2) on the drive input and output sides and is compared with an overspeed of revolution which is stored in the analysing unit (2.1, 2.2), to allow the electric drive to be switched off for safety purposes.

9. Arrangement according to claim 8, **characterised in that** the body is a cable drum (9) and the values of the overspeed of revolution are stored in the analysing units (2.1, 2.2) as a function of the load to be lifted.

10. Arrangement according to one of claims 3 to 9, **characterised in that** the analysing units (2.1, 2.2) are of redundant design in respect of their operation and hardware.

11. Arrangement according to one of claims 3 to 10, **characterised in that** the analysing units (2.1, 2.2) are combined into a single fail-safe analysing unit.

12. Arrangement according to one of claims 3 to 11, **characterised in that** the sensors (7.1, 7.1, 8.1, 8.2) are connected to respective transmitting units, and each of the transmitting units is connected, via a transmission path of its own, to a respective receiving unit, which is connected in turn to the associated analysing unit (2.1, 2.2).

## Revendications

1. Procédé de déconnexion de sécurité de commandes électriques conformées en moteurs de grue à courant triphasé commandés en fréquence, dans lequel des signaux, provenant d'au moins un capteur (7.1, 7.2, 8.1, 8.2) qui détecte les mouvements causés par la commande électrique, sont comparés à une valeur limite présélectionnée dans une unité d'exploitation (2.1, 2.2) et, en cas de dépassement de la valeur limite présélectionnée, la commande électrique est soumise à une déconnexion de sécurité par l'unité d'exploitation (2.1, 2.2) à la manière d'un élément interrupteur de fin de course,
les signaux des capteurs (7.1, 7.2, 8.1, 8.2) étant détectés de façon redondante et étant comparés de façon redondante à des valeurs limites présélectionnées dans des unités d'exploitation (2.1, 2.2) de sorte que, en cas de dépassement de la valeur limite présélectionnée, la commande électrique (12) est soumise de façon redondante à une déconnexion de sécurité sans utiliser d'interrupteurs mécaniques de fin de course,
les signaux des capteurs redondants (7.1, 7.2, 8.1, 8.2) étant amenés respectivement à des unités d'exploitation redondantes associées (2.1, 2.2) où ils sont exploités et les unités d'exploitation redondantes (2.1, 2.2) se surveillant mutuellement,
**caractérisé en ce que**, lorsque les signaux respectifs des capteurs (7.1, 7.2, 8.1, 8.2) divergent l'un de l'autre, la commande électrique (12) est soumise à une déconnexion de sécurité à chaque fois par des éléments de déconnexion de sécurité redondants (16, 17) et, lorsque les signaux de déconnexion divergent l'un de l'autre, la commande électrique (12) est soumise à une déconnexion de sécurité à chaque fois par des éléments de déconnexion de sécurité redondants (16, 17).

2. Procédé selon la revendication 1, **caractérisé en ce que** la vitesse de rotation d'un corps déplacé par la commande électrique (2), notamment un tambour à câble (9) et/ou une roue porteuse (11), est détectée par des capteurs redondants (7.1, 7.2) et la position du corps déplacé par la commande électrique (12), notamment un tambour à câble (9) et/ou une roue porteuse (11), est détectée par d'autres capteurs redondants (8.1, 8.2).

3. Dispositif de déconnexion de sécurité de commandes électriques conformées en moteurs de grue à courant triphasé commandés en fréquence, lequel est destiné à mettre en oeuvre un procédé selon les revendications précédentes 1 ou 2 et comporte au moins un capteur qui détecte les mouvements causés par la commande électrique, une unité d'exploitation traitant les signaux du capteur afin de comparer les signaux du capteur à une valeur limite présélectionnée et, en cas de dépassement de la valeur limite présélectionnée, de soumettre la commande électrique à une déconnexion de sécurité à la manière d'un élément interrupteur de fin de course,
les capteurs (7.1, 7.2, 8.1, 8.2) et l'unité d'exploitation (2.1, 2.2) étant prévus de façon redondante et l'un des capteurs redondants (7.1, 7.2, 8.1, 8.2) étant associé à chaque fois à l'une des unités d'exploitation (2.1, 2.2), les signaux des capteurs (7.1, 7.2, 8.1, 8.2) étant comparés aux valeurs limites présélectionnées dans les unités d'exploitation (2.1, 2.2) et soumettant de façon redondante, en cas de dépassement de la valeur limite présélectionnée, la commande électrique (12) à une déconnexion de sécurité sans utiliser d'interrupteurs mécaniques de fin de course,
les unités d'exploitation redondantes (2.1, 2.2) étant reliées entre elles par une liaison de communication (4) afin de se surveiller mutuellement, les signaux des capteurs redondants (7.1, 7.2, 8.1, 8.2) étant comparés dans les unités d'exploitation redondantes respectivement associées (2.1, 2.2) et les unités d'exploitation redondantes (2.1, 2.2) étant reliées entre elles par une liaison de communication (4) afin de se surveiller mutuellement,
**caractérisé en ce que** les unités d'exploitation (2.1, 2.2) soumettent la commande électrique (12) à une déconnexion de sécurité à chaque fois par le biais d'éléments de déconnexion de sécurité (16, 17) lorsque les signaux respectifs des capteurs (7.1, 7.2, 8.1, 8.2) divergent l'un de l'autre et, lorsque les signaux de déconnexion divergent l'un de l'autre, soumettent la commande électrique (12) à une déconnexion de sécurité à chaque fois par le biais d'éléments de déconnexion de sécurité redondants (16, 17).

4. Dispositif selon la revendication 3, **caractérisé en ce que**, pour détecter la vitesse de rotation d'un corps déplacé par la commande électrique (12), notamment un tambour à câble (9) et/ou une roue porteuse (11), des premiers capteurs redondants (7.1, 7.2) sont associés au corps et, pour détecter la position du corps déplacé par la commande électrique (12), notamment un tambour à câble (9) et/ou une roue porteuse (11), des deuxièmes capteurs redondants sont associés au corps.

5. Dispositif selon l'une des revendications 3 ou 4, **caractérisé en ce qu'**au moins deux générateurs de valeur absolue (8.1, 8.2) sont associés en sortie à la commande électrique (12) pour effectuer une détection de position redondante.

6. Dispositif selon la revendication 5, **caractérisé en ce que** les deux unités d'exploitation (2.1, 2.2) actualisent en permanence les valeurs de position absolues des deux générateurs de valeur absolue (8.1, 8.2) et comparent les valeurs de position réelles à des valeurs de position de consigne, stockées de façon permanente dans les unités d'exploitation (2.1, 2.2), d'un chemin de roulement ou d'un chemin d'enroulement/de déroulement d'un câble.

7. Dispositif selon la revendication 5 ou 6, **caractérisé en ce que**, lorsque les valeurs de position réelles fournies instantanément par les générateurs de valeur absolue (8.1, 8.2) s'approchent de la valeur de position définissant la fin du chemin de roulement respectivement le chemin d'enroulement/de déroulement, les unités d'exploitation (2.1, 2.2) abaissent les points de commutation sur leurs courbes de déconnexion proportionnellement à cette approche.

8. Dispositif selon l'une des revendications 3 à 7, **caractérisé en ce qu'**un générateur d'impulsions (7.1) du côté de la commande et au moins un générateur d'impulsions (7.2) du côté de la sortie sont associés au corps (9, 11), la vitesse de rotation de l'axe du corps est calculée dans chacune des unités d'exploitation (2.1, 2.2) en continu et de façon redondante en se fondant sur les incréments des générateurs d'impulsions (7.1, 7.2) du côté de la commande et du côté de la sortie et est comparée à une valeur d'une vitesse de rotation en surrégime, stockée dans l'unité d'exploitation (2.1, 2.2), afin de soumettre la commande électrique à une déconnexion de sécurité.

9. Dispositif selon la revendication 8, **caractérisé en ce que** le corps est un tambour à câble (9) et les valeurs de la vitesse de rotation en surrégime de la charge à soulever sont stockées dans les unités d'exploitation (2.1, 2.2).

10. Dispositif selon l'une des revendications 3 à 9, **caractérisé en ce que** les unités d'exploitation (2.1, 2.2) sont fonctionnellement et matériellement conçues de façon redondante.

11. Dispositif selon l'une des revendications 3 à 10, **caractérisé en ce que** les unités d'exploitation (2.1, 2.2) sont rassemblées en une seule unité d'exploitation dont le fonctionnement est sûr.

12. Dispositif selon l'une des revendications 3 à 11, **caractérisé en ce que** les capteurs (7.1, 7.2, 8.1, 8.2) sont reliés respectivement à une unité d'émission, chacune des unités d'émission est reliée par une voie de transmission propre à une unité de réception correspondante qui est raccordée de son côté à l'unité d'exploitation associée (2.1, 2.2).
